# EUROPEAN PATENT SPECIFICATION

(11) **EP 2 281 453 B1**
(45) Date of publication and mention of the grant of the patent: **05.08.2015**
(21) Application number: 10250738.1
(22) Date of filing: 08.04.2010
(51) Int. Cl.: A01K 87/08, A63B 53/14, B62K 21/26

(54) **Improved grip for the handle of an article**
Verbesserter Griff zur Handhabung eines Artikels
Prise améliorée pour la poignée d'un article

(30) Priority: 10.04.2009 US 168546 P; 28.04.2009 US 173561 P; 02.06.2009 US 183478 P; 02.06.2009 US 183488 P; 02.04.2010 US 753804; 02.04.2010 US 753669
(43) Date of publication of application: 09.02.2011
(73) Proprietor: Huang, Ben, Huntington Beach, California 92648 (US)
(72) Inventor: Huang, Ben, Huntington Beach, California 92648 (US)
(74) Representative: Boult Wade Tennant

(56) References cited:
- EP-A1- 1 738 808
- GB-A- 2 192 550
- US-A- 4 373 718
- US-A1- 2008 120 893
- US-A1- 2008 229 646
- US-B1- 6 314 617

## Description

### BACKGROUND OF THE INVENTION

### Field of the Invention

Embodiments of the invention relate to an improved grip for use with the handle portion of articles, in particular, the handle portion of a bicycle.

### Description of the Related Art

Though grips have been developed, there remains a need for an improved grip.

### SUMMARY OF THE INVENTION

Some embodiments provide a grip that is light in weight and reduces or eliminates the absorption of water. Embodiments can be configured for use with at least a portion of the handle portion of a variety of articles including bicycles. Some embodiments include a gripping portion including an EVA inner or backing layer and a combination polyurethane and non-woven fabric. In some embodiments, the fabric layer can be impregnated with the polyurethane. In some embodiments, the fabric layer is pre-processed with a polymeric compound to enhance the elasticity of the fabric layer. In some embodiments, the polyurethane further includes a woven fabric mesh layer disposed outside the fabric layer.

Some embodiments provide a method of manufacturing a grip use with at least a portion of the handle portion of a variety of articles including bicycles. In some embodiments, the method includes dipping a thin fabric substrate into a bath of polyurethane so as to coat both sides of the fabric substrate with polyurethane, removing a substantial portion of the polyurethane from one side of the fabric substrate and smoothing the outer surface of the polyurethane on the other side of the fabric substrate. In some embodiments, the polyurethane soaks into and permeates through the fabric substrate. In some embodiments, the fabric substrate receives a polymeric treatment prior to being dipped into the polyurethane bath to enhance the elasticity of the fabric. In some embodiments, the fabric substrate is compressed prior to being dipped into the polyurethane bath. In some embodiments, the fabric substrate receives a dimpled surface pattern prior to being dipped into the polyurethane bath. The method may further include dipping the polyurethane and fabric substrate into a water bath to facilitate the coagulation of the polyurethane in and around the fabric substrate. The coagulated combination substrate of polyurethane and fabric can be squeezed, by for example, by a pair of rollers, to squeeze fluid from the coagulated polyurethane pores.

Some embodiments provide a grip configured for use with a handle portion of an article, the grip comprising a gripping member comprising an inner layer comprising ethylene vinyl acetate and an outer layer comprising polyurethane and an elastic fabric having an inner surface and an outer surface wherein the inner and outer surfaces of the elastic fabric comprise a pattern of crests and troughs. In some embodiments, a substantial portion of the crests on the inner surface are substantially free of polyurethane and the polyurethane fills the majority of the troughs on both the inner and outer surfaces of the elastic fabric and covers the majority of the crests on the outer surface of the elastic fabric. In some embodiments, the polyurethane in the troughs of the inner surface of the elastic fabric and the crests of the inner surface of the elastic fabric are joined to the inner layer.

Some embodiments provide a method of making a gripping member for use with the handle portion of an article which includes the steps of: (1) immersing a fabric sheet having an inner surface and an outer surface into liquid polyurethane such that polyurethane forms a coating over both the inner surface and the outer surface; (2) coagulating the polyurethane on and in the first fabric sheet to form an outer sheet; (3) joining the outer sheet to a sheet comprising ethylene vinyl acetate; and (4) forming a gripping member from the outer sheet joined to the ethylene vinyl acetate sheet, the gripping member defining an inner surface and an outer surface.

Some embodiments provide a grip configured for use with a handle portion of an article, wherein the grip includes a gripping member with an inner layer including ethylene vinyl acetate joined to an outer layer. The outer layer can include polyurethane and fabric, wherein polyurethane substantially covers both sides of the fabric. In some embodiments, the grip is configured for use with a bike handle.

Some embodiments provide a grip configured for use with a handle portion of an article, wherein the grip includes a gripping member with a an inner layer comprising ethylene vinyl acetate and an outer layer comprising polyurethane and an elastic fabric, the outer layer having an inner surface and an outer surface. In some embodiments, an inner and outer surface of the elastic fabric comprise a pattern of crests and troughs, the crests on the inner and outer surfaces defining an inner fabric surface plane and an outer fabric surface plane, respectively. In some embodiments, the outer surface of the outer layer and the outer fabric surface plane define a first thickness and the inner surface of the outer layer and the inner fabric surface plane define a second thickness, the first thickness being greater than the second thickness.

Some embodiments include a bicycle grip kit including instructions for use and a gripping member configured as a strip, wherein the gripping member includes an inner layer comprising ethylene vinyl acetate and an outer layer comprising polyurethane and an elastic fabric having an inner surface and an outer surface. In some embodiments, the inner and outer surfaces of the elastic fabric comprise a pattern of crests and troughs, wherein some of the crests on the inner surface are substantially free of polyurethane and the polyurethane fills the majority of the troughs on both the inner and outer surfaces of the elastic fabric and covers the majority of the crests on the outer surface of the elastic fabric. In some embodiments, the polyurethane in the troughs of the inner surface of the elastic fabric and the crests of the inner surface of the elastic fabric are joined to the inner layer.

Embodiments of the present invention include one or more advantages including offering great feel by transmitting sensitive vibrations to the hand of a user, providing shock absorption, and being light in weight and of low density. In the context of bicycle grips, the low density and extremely light weight ensures the grip remains as light as possible. For cyclists of all levels, and in particular at the more elite levels, every ounce counts when accessories are placed on a bicycle. Grips are desired that can provide shock absorption, are lightweight, and/or are readily applied to the handle.

### BRIEF DESCRIPTION OF THE DRAWINGS

**FIG. 1** is a perspective view of an exemplary bicycle handle incorporating a grip according to some embodiments;

**FIG. 2** is a perspective view of a gripping member according to some embodiments;

**FIG.** 3 is a section view of the gripping member shown in **FIG. 2** taken along the line 3-3 in **FIG. 2****;**

**FIG. 4** is an enlarged view of a portion of the gripping member designated by the circle 4 in **FIG. 3****;**

**FIG. 5** is a schematic view of an apparatus for use in the manufacturing of the gripping member shown in **FIG. 2** according to some embodiments;

**FIG. 6** is a section view of a component of the gripping member shown in **FIG. 2** taken along the line 6-6 in **FIG. 5****;**

**FIG. 6A** is a top view of a portion of the component shown in **FIG. 6** according to some embodiments;

**FIG. 6B** is an enlarged view of a portion of the component shown in FIG. **6** designated by the circle 6B in **FIG. 6** according to some embodiments;

**FIG. 7** is a section view of a component of the gripping member shown in FIG. 2 taken along the line 7-7 in **FIG. 5****;**

**FIG. 8** is a section view of a component of the gripping member shown in FIG. 2 taken along the line 8-8 in **FIG. 5****;**

**FIG. 9** is a section view of a component of the gripping member shown in FIG. 2 taken along the line 9-9 in **FIG. 5****;**

**FIG. 10** is an enlarged view of a portion of the component shown in **FIG. 8** designated by the circle 10 in **FIG. 8** according to some embodiments;

**FIG. 11** is an enlarged view of a portion of the component shown in **FIG**. **9** designated by the circle 11 in **FIG. 9** according to some embodiments;

**FIG. 11A** is an alternative view of the portion shown in **FIG.11** according to some embodiments;

**FIG. 12A** is a top view of the component shown in **FIG. 9****;**

**FIG. 12B** is a bottom view of the component shown in **FIG. 9****;**

**FIG. 13** is a schematic view of an apparatus for use in the manufacturing of the gripping member shown in **FIG. 2** according to some embodiments;

**FIG. 14** is a section view of a component of the gripping member shown in FIG. 2 taken along the line 14-14 in **FIG. 13****;**

**FIG. 15** is a section view of a component of the gripping member shown in FIG. 2 taken along the line 15-15 in **FIG. 13****;**

**FIG. 16** is a section view of a component of the gripping member shown in FIG. 2 taken along the line 16-16 in **FIG. 13****;**

**FIG. 17** is an enlarged view of a portion of the component shown in **FIG. 16** designated by the circle 17 in **FIG. 16** according to some embodiments;

**FIG 18** is a section view of a gripping member cut as a strip from a sheet of gripping member material according to some embodiments;

**FIG. 19** is a schematic view of the gripping member shown in **FIG. 18** in an apparatus for use in the manufacturing of a gripping member according to some embodiments;

**FIG. 20** is a schematic view of the gripping member shown in **FIG. 18** being skived according to some embodiments;

**FIG. 21** is a section view of a gripping member prior to application to the handle of an article according to some embodiments;

**FIG. 22** is a perspective view of an exemplary bicycle handle prior to the application of a gripping member according to some embodiments;

**FIG. 23** is a side view of a gripping member being spirally wrapped around a handle according to some embodiments; and

**FIG. 24** is a side view of the gripping member and handle combination shown in FIG. 23 after the end has been finished according to some embodiments.

**FIG. 25** is a SEM image of a cross-section of the component schematically illustrated in, for example, **FIGS. 6-6B****.**

**FIG. 26** is an enlarged SEM image of a portion of the cross-section shown in FIG. 25.

**FIG. 27** is an enlarged SEM image of another portion of the cross-section shown in **FIG. 25****.**

**FIG. 28** is a SEM image of a surface of the component schematically illustrated in, for example, **FIGS. 6-6B****.**

**FIG. 29** is a SEM image of a cross-section of the component schematically illustrated in, for example, **FIGS. 9 and 11****.**

**FIG. 30** is an enlarged SEM image of a portion of the cross-section shown in FIG. 29.

**FIG. 31** is an enlarged SEM image of a portion of the enlarged cross-section shown in **FIG. 30****.**

**FIG. 32** is a SEM image of the bottom surface of the component schematically illustrated in, for example, **FIGS. 9, 11**, and **12A-B.**

**FIG. 33** is a SEM image of a portion of a cross-section of the gripping member schematically illustrated in, for example, **FIGS. 19,** 20, **and 21****.**

**FIG. 34** is an enlarged SEM image of a portion of the cross-section shown in FIG. 33.

**FIG. 35** is an enlarged SEM image of a portion of the cross-section shown in **FIG. 34****.**

While the invention will now be described in detail with reference to the figures, it is done so in connection with the illustrative embodiments. It is intended that changes and modifications can be made to the described embodiments without departing from the true scope and spirit of the invention.

### DETAILED DESCRIPTION OF THE PREFERRED EMBODIMENT

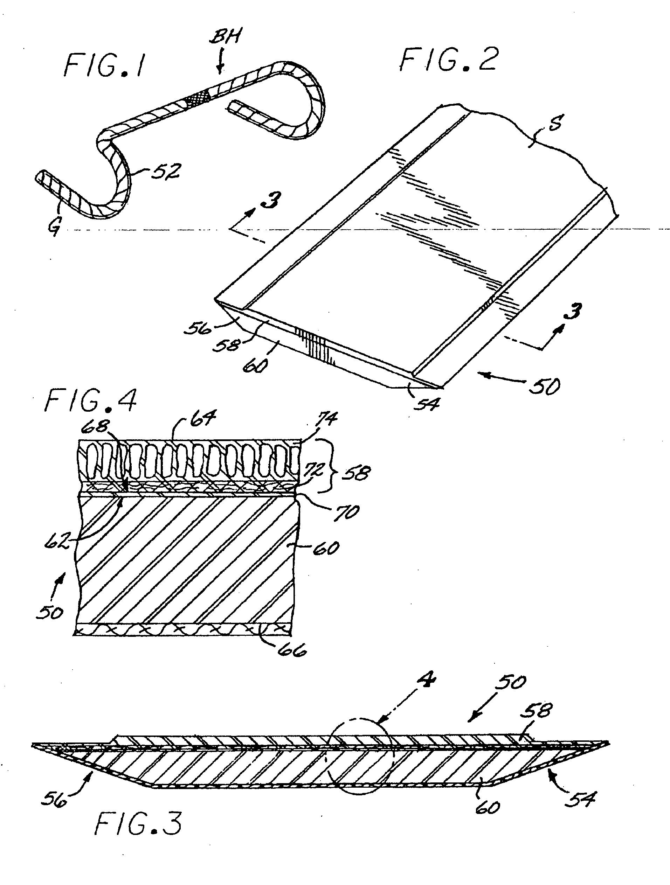

**FIG. 1** is a perspective view of a bicycle handle BH or handlebar incorporating a grip G according to some embodiments.

**FIGS. 2-4** illustrate a gripping member 50 according to some embodiments. The gripping member 50 is adapted to be applied to the handle of an article, for example, a bicycle handle. Shown as a strip S, the illustrated embodiment is spirally wrapped around the handle to form a generally helical seam 52 on the surface of the gripping member 50 that corresponds to the joint between the side edges 54, 56 of the strip as described in greater detail below. Alternatively, the gripping member 50 could be formed as a panel (not shown) and provide a number of the advantages of the embodiment of **FIGS. 2-4**. The gripping member 50 may include a mounting sleeve or tube (not shown) around which it would be folded or wrapped. In some such embodiments, the panel would form a substantially longitudinal seam extending along the axis of the sleeve. Such an embodiment may be advantageous in some bicycle applications where the handles are short and generally straight, for example, bmx bikes or mountain bikes. To conserve weight, the tube may be made from an ethylene vinyl acetate foam, as described in greater detail below. In some embodiments, multiple strips and/or panels may be incorporated.

**FIG. 3** is a section view of the gripping member 50 taken along the line 3-3 in FIG. 2. In some embodiments, the gripping member 50 preferably includes an outer layer 58 adhered, bonded, glued or otherwise attached to a base or inner layer 60. The outer layer 58 defines an inner surface 62 and an outer surface 64. Similarly, the inner layer 60 defines an inner surface 66 and an outer surface 68 **(****FIG. 4****).** In some embodiments, a spray on adhesive 70 is applied to one or both of the inner surface 62 of the outer layer 58 and/or the outer surface 68 of the inner layer 60. In some embodiments, the inner layer 60 comprises EVA to reduce the weight and lower the density of the finished grip G and to provide a cushioning material that is less inclined to absorb and hold water or other fluids. This is particularly useful in bicycle grip applications, for example when the rider sweats or rides through inclement weather, as the grip G resists absorbing water to maintain its light weight while still providing important cushioning and traction characteristics. In some embodiments, the EVA inner layer 60 is between approximately 1 and 3 millimeters thick. In some embodiments, the EVA inner layer 60 is between approximately 1.5 and 2.5 millimeters thick. In a preferred embodiment, the EVA inner layer 60 is approximately 2 millimeters thick.

**FIG. 4** is an enlarged view of a portion of the gripping member 50 designated by the circle 4 in **FIG. 3****.** As described in greater detail below, the outer layer 58 preferably includes a thin non-woven fabric layer 72 or substrate that is saturated with polyurethane 74, by, for example, dipping the thin fabric layer 72 into a polyurethane bath 102. The polyurethane 74 is then preferably coagulated to form one or more closed cells or pores 76.

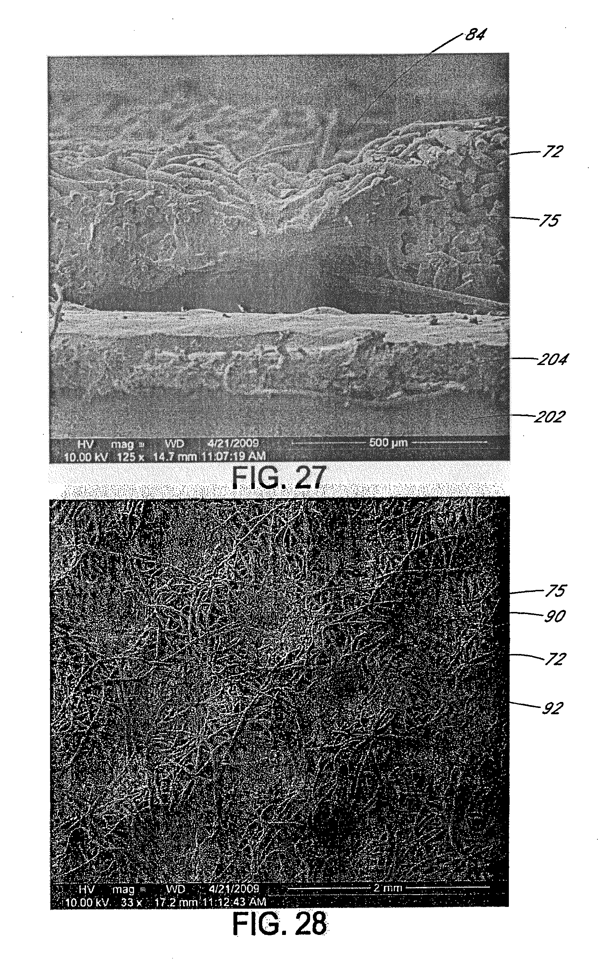

The non-woven fabric layer 72 may be fabricated of suitable materials such as nylon, cotton, polyester, or the like and may be felt. In some embodiments, the non-woven fabric substrate 72 receives a polymeric treatment (polymer 75 from polymeric treatment shown in, for example, **FIG. 27**) prior to being dipped into the polyurethane bath 102 to enhance the elasticity of the fabric 72. In some embodiments, the fabric substrate 72 is compressed prior to being dipped into the polyurethane bath 102. In some embodiments, the fabric substrate 72 receives a dimpled surface pattern prior to being dipped into the polyurethane bath 102. The dimpled pattern facilitates the flow of polyurethane 74 into the fabric layer 72 which can reduce the amount of space available for water and other fluids to soak into and become trapped within the gripping member 50. Including a polyurethane outer layer 74 with an elastic thin felt layer 72 with dimples 84 extending partially and/or completely through the felt layer 72 enhances the flexibility of the grip while providing a tacky surface to be gripped. This is particularly useful in bicycle grip applications. In some embodiments, the thin non-woven fabric layer 72 is between approximately 0.1 and 0.5 millimeters. In some embodiments, the thin non-woven fabric layer 72 is between approximately 0.25 and 0.4 millimeters thick. In some embodiments, the thin non-woven fabric layer 72 is between approximately 0.28 and 0.32 millimeters thick. In a preferred embodiment, the thin fabric layer 72 is approximately 0.3 millimeters thick.

The use of low density EVA in the inner layer 60 permits a generally thick inner layer 60 to absorb shock and provide cushion while still maintaining a light overall grip weight. In some embodiments, the ratio of the thickness of the inner layer 60 to the thin non-woven fabric layer 72 is between approximately 3 and 15. In some embodiments, the thickness ratio is between approximately 5 and 10. In a preferred embodiment, the thickness ratio is approximately 6. In some embodiments, the ratio of the thickness of the inner layer 60 to the outer layer 58 of polyurethane 74 and fabric 72 is between approximately 2.5 and 5.5. In some embodiments, the thickness ratio is between approximately 3 and 4. In a preferred embodiment, the thickness ratio is approximately 3.5.

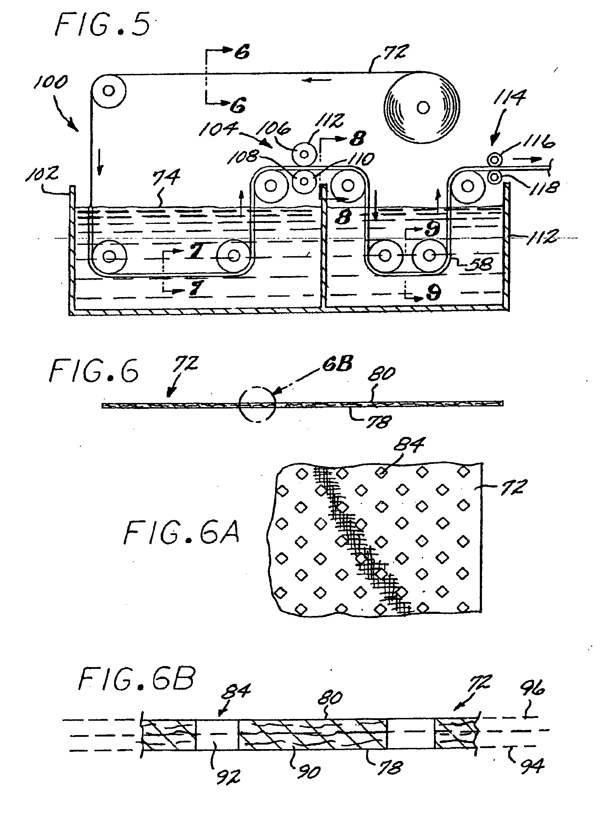

**FIGS. 5-17** illustrate a method of manufacturing a gripping member 50 according to some embodiments. **FIG. 5** is a schematic view of an apparatus 100 useful in some embodiments of the manufacturing method. Generally, in some embodiments, a thin non-woven fabric sheet 72 is dipped into a polyurethane bath 102. As used in this application, dip is intended to be a broad term meaning, for example, to immerse or submerge an object. In some embodiments, the bath 102 is a solution of polyurethane 74 (e.g., polyester, polyether) dissolved in dimethylformamide (DMF). The solids content of the polyurethane 74 will vary in accordance with the desired hardness of such polyurethane. A preferred solids content solution is approximately 28.5-30.5%, with a viscosity range of about 60,000-90,000 cps measured at 25.+-.0.5 degrees C. The viscosity of the polyurethane bath 102 can be manipulated to control the thickness of the polyurethane 74 that ultimately collects on the fabric sheet 72. The polyurethane 74 preferably coats both sides of the fabric sheet 72 and saturates through the fabric sheet 72. As discussed above, the fabric sheet 72 may be pre-dipped, saturated, or coated with a polymer treatment to enhance its elasticity. One suitable polymer is Vistamaxx Specialty Elastomer available from ExxonMobil Chemical Company. The Vistamaxx is a member of the Olefin Polymer family. In addition, the fabric sheet 72 may be compressed and/or receive a dimpled surface treatment. The dimples 84 can form crests 90 and troughs 92 on the outer 80 and/or inner surfaces 78 of the fabric sheet 72. In some embodiments, the dimples 84 extend partially through the fabric sheet 72. In some embodiments, the dimples 84 extend all the way through the sheet 72.

In some embodiments, the thin fabric layer 72 is coated with and/or saturated by polyurethane 74. In some embodiments, the polyurethane 74 coating the thin fabric layer 72 is between approximately 0.1 and 0.4 millimeters thick measured from the outer surface 80 of the fabric layer 72. In some embodiments, the polyurethane 74 coating the thin fabric layer 72 is between approximately 0.22 and 0.28 millimeters thick. In a preferred embodiment, the polyurethane 74 coating the thin fabric layer 72 is approximately 0.25 millimeters thick.

In some embodiments, not shown, additional liquid polyurethane can be added to the top surface of the uncoagulated polyurethane 74 that coats the thin fabric sheet 72 after the sheet 72 is directed out of the polyurethane bath 102. The second polyurethane can include one or more different characteristics from the polyurethane 74 in the bath 102 to provide contrast on the gripping member 50. For example, the second polyurethane can include a different color, durometer or level of tackiness.

In some embodiments, the fabric/polyurethane sheet is directed out of the polyurethane bath 102 and into a first processing stage 104 in which a portion of the polyurethane 74 is removed from the bottom 80 of the fabric sheet 72. In some embodiments, a majority of the polyurethane 74 is removed. In addition, the top surface 86 of the polyurethane 74 is preferably smoothed. In some embodiments, the processing stage 104 occurs in a compression system comprising a pair of rollers 106, 108. The spacing of the rollers 106, 108 can be used to help determine the thickness of the polyurethane 74 coating the fabric sheet 72. In some embodiments, the bottom roller 108 includes a rubber surface 110 or a surface comprising another similar resilient material. The bottom roller 108 preferably removes a portion of the polyurethane 74 and in some embodiments the majority of the polyurethane 74 from the bottom 80 of the fabric sheet 72. In some embodiments, the bottom roller 108 can be substituted with any other similar apparatus which strips off polyurethane 74 from the bottom 80 of the fabric sheet 72. For example, a non-rotating edge may be used. In some embodiments, the top roller 106 includes a stainless steel surface 112 or a surface comprising another similar smooth, hard surface. The top roller 106 preferably smoothes the top surface of the polyurethane 74 that coats the fabric sheet 72.

When a wet coagulation process is used, the saturated and coated fabric sheet 72 is then preferably directed into one or more water baths 120 to displace the DMF from the polyurethane 74 and to facilitate the formation of pores 76 in the polyurethane 74. From the water bath 120, the coagulated polyurethane sheet 74 is preferably directed to another processing stage 114 to press water and DMF from the coagulated polyurethane sheet 58. In some embodiments, the processing stage 114 includes one or more pairs of rollers 116, 118.

**FIG. 6** is a section view taken along the line 6-6 of the thin non-woven fabric sheet 72 before it is dipped in the polyurethane bath 102 according to some embodiments. **FIG. 6A** is an enlarged surface view of the thin fabric sheet 72. As described above, the non-woven sheet 72 is preferably compressed prior to being dipped. The compression process in some embodiments can create a pattern of dimples 84 or crests 90 and troughs 92 as shown in **FIG. 6A****.** These holes 84 facilitate the saturation of polyurethane 74 into and through the fabric sheet 72 during the dipping and coagulation process. **FIG. 6B** is an enlarged surface view of the thin fabric sheet 72. In some embodiments, the dimples 84 extend a through the fabric sheet 72 as shown in **FIG. 6B****.** Alternatively, in some embodiments a portion of the sheet 72 remains across the troughs 92 of the dimples 84. For example, if sheet 72 has a polymeric treatment before dipping as described above, polymer 75 may extend across the dimples 84 as shown, for example, in **FIG. 27****.** In some embodiments, the upper or outer surface 78 of the fabric sheet 72 defines an outer surface plane 94 generally defined by the crests 90 on the outer surface 78. In some embodiments, the lower or bottom or inner surface 80 of the fabric sheet 72 defines an inner surface plane 96 generally defined by the crests 90 on the inner surface 80.

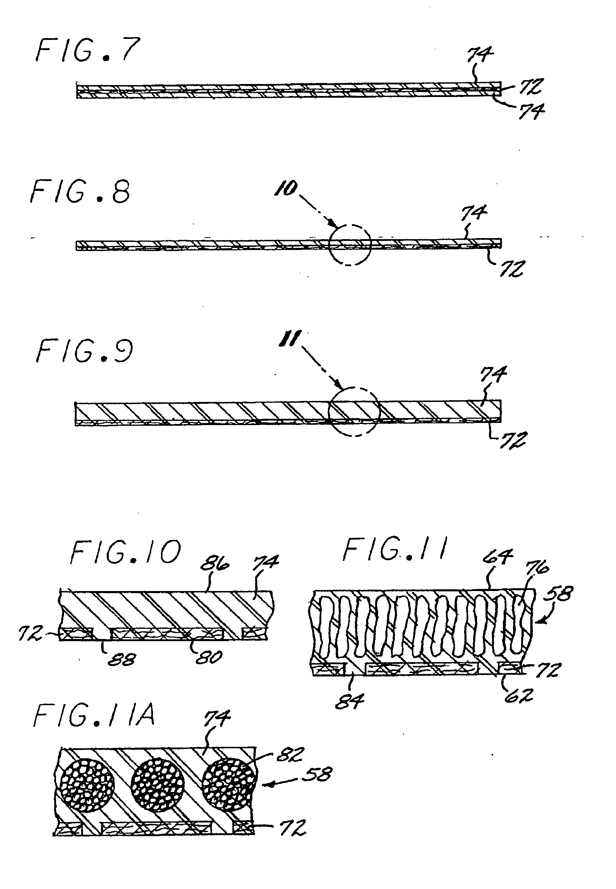

**FIG. 7** is a section view taken along the line 7-7 of the thin fabric sheet 72 after it has been dipped into the polyurethane bath 102 according to some embodiments. The polyurethane 74 preferably coats both sides 78, 80 of the fabric sheet 72 and penetrates through the sheet 72. In some embodiments, the polyurethane 74 fills the crests and troughs on both sides 78, 80 of the sheet.

**FIG. 8** is a section view taken along the line 8-8 of the thin fabric sheet 72 after it has been dipped into the polyurethane bath 102 and a portion of the polyurethane 74 has been stripped from the bottom side 80 according to some embodiments. **FIG. 10** is an enlarged section view of the sheet 72 after the bottom 80 has been substantially stripped of polyurethane 74, and before the polyurethane 74 on top and inside is coagulated. The non-woven fabric 72 generally includes holes 84 that allow portions of the polyurethane 74 to extend from the top surface 86 of the polyurethane 74 coating the fabric to the bottom surface 80 of the saturated sheet of fabric 72. In some embodiments, the polyurethane 74 coats outer surface 78 of the fabric sheet 72 and extends between the inner 96 and outer planes 94 of the fabric sheet 72.

**FIG. 9** is a section view taken along the line 9-9 of the coated and saturated sheet 58 after it has been dipped into the water bath 120 according to some embodiments. **FIG. 11** is an enlarged section view of the coated and saturated sheet 58 after the polyurethane 74 is coagulated. The coagulation process generally allows the polyurethane 74 to expand and increase in thickness. In addition, pores 76 preferably form within the polyurethane 74 and enhance can enhance features of the grip G including tackiness of the gripping member 50.

In some embodiments, the polyurethane 74 coating the top or outer surface 78 of the fabric sheet 72 defines an outer surface 86. Similarly, the polyurethane 74 coating the bottom or inner surface 80 of the fabric sheet 72 defines an inner surface 88. The polyurethane 74 defines a first thickness between the outer surface 86 of the polyurethane 74 and the outer surface 78 or plane 94 of the fabric sheet 72. The polyurethane 74 defines a second thickness between the inner surface 88 of the polyurethane 74 and the inner surface 80 of the sheet 72. In some embodiments, the first thickness is substantially greater than the second thickness. In some embodiments, the first thickness is between approximately 2 and 50 times as thick as the second thickness. In some embodiments, the first thickness is between approximately 10 and 15 times as thick as the second thickness. In some embodiments, the second thickness is approximately zero.

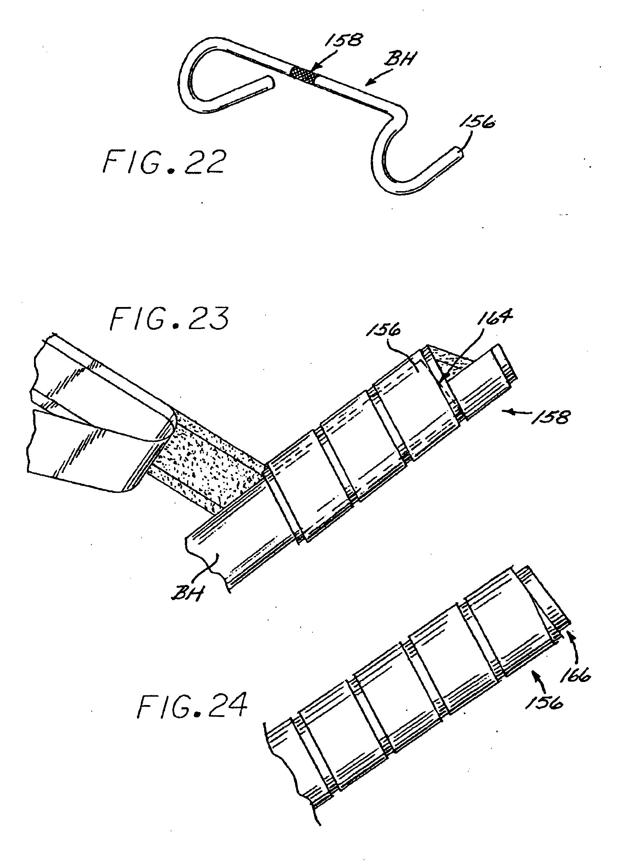

**FIG. 11A** is an alternative view of the portion shown in **FIG. 11** according to some embodiments. In this embodiment, an additional woven fabric mesh 82 is included in the polyurethane layer 74 during the manufacturing process. In some embodiments, the fabric mesh 82 is attached to the thin non-woven fabric layer 72 prior to dipping in the polyurethane bath 102. For example, the fabric mesh 82 can be stitched to an end of the thin fabric layer 72 and the combination dipped into a polyurethane bath 102. An example of the dipping process is described in greater detail above. The woven fabric mesh 82 generally does not absorb the polyurethane 74 during the preparation process. In some embodiments, the outer layer 58 of the gripping member 50 includes a saturated thin fabric layer 72 and an un-saturated fabric mesh layer 82. In some embodiments, the fabric mesh 82 includes longitudinally extending fibers (fibers that extend generally along the length of the long axis of a grip for a grip formed by a panel or along the long axis of a strip is the finished grip is formed from a spirally wrapped strip **(****FIG. 24****))** and transversely extending fibers. In some embodiments, the longitudinally extending fibers will preferably be of a larger diameter than the transversely extending fibers. For example, the longitudinal fibers may have a diameter between approximately 0.4 and 0.75 millimeters and the transverse fibers may have a diameter between approximately 0.25 and 0.5 millimeters. In some embodiments, the longitudinal and transverse fibers may be of substantially equal diameters. The woven fabric mesh 82 may be fabricated of suitable materials such as nylon, cotton, polyester, or the like.

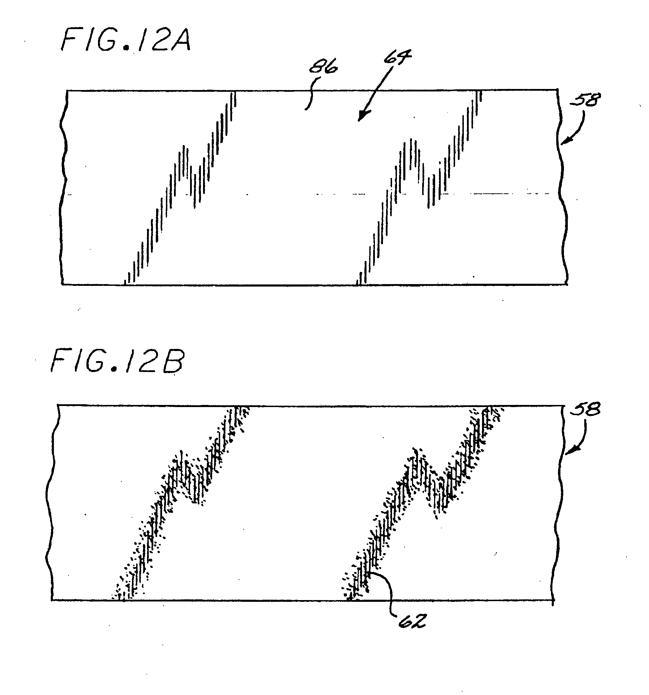

**FIGS. 12A** and **B** illustrate top and bottom surface views, respectively, of the coagulated polyurethane/fabric sheet 58. **FIG. 12A** shows the generally smooth surface 86 of the coagulated polyurethane 74. This surface 86 can be further manipulated, such as, for example, by using a heated mold or platen to form a friction enhancing pattern thereon or to imprint logos or other indicia. In addition, the surface 86 can include printed materials as known to those of skill in the art. **FIG. 12B** shows the bottom surface 62 of the coagulated polyurethane/fabric sheet 58. In some embodiments, the bottom surface 62 includes both fabric fibers from the thin non-woven fabric sheet 72 as well as polyurethane 74. The bottom surface 62 is preferably rougher than the smooth top surface 64 which can facilitate bonding, adhering, or otherwise joining the polyurethane/felt sheet 58 to its EVA inner layer 60 as described in greater detail below according to some embodiments. In some embodiments, a portion of polyurethane 74 remains on the bottom or inner surface 80 of the fabric sheet 72 after the treatments described above. In some embodiments, the fabric sheet 72 is discernable through at least a portion of the polyurethane 74 remaining on the inner surface 62.

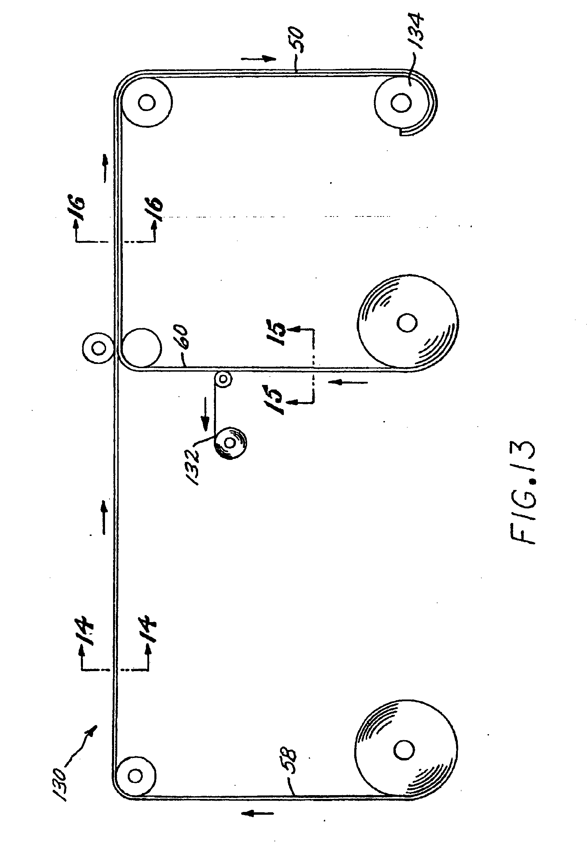

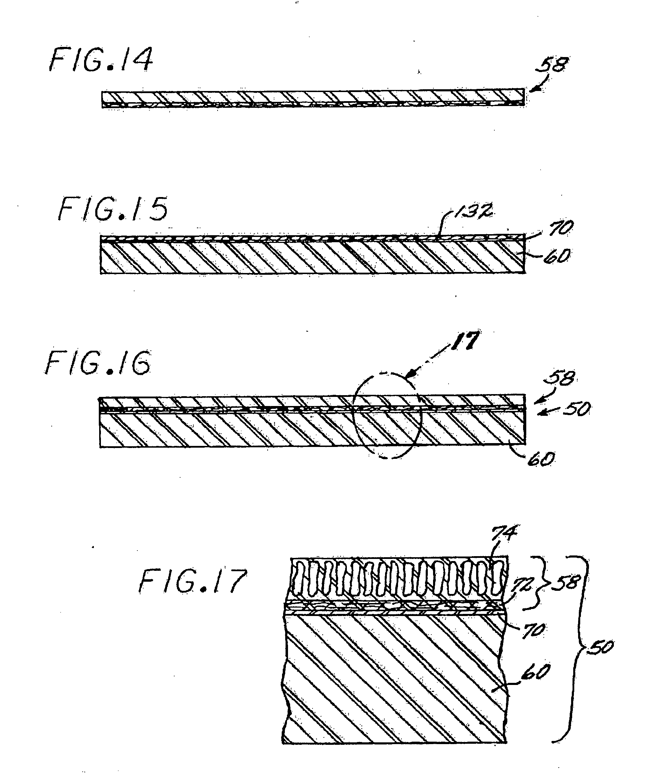

**FIG. 13** is a schematic view of an apparatus 130 useful in some embodiments of the manufacturing method. The polyurethane/felt sheet 58 described above is preferably bonded to an EVA inner or base layer 60. **FIGS. 14-17** illustrate section views of the gripping member 50 during various points of the manufacturing process according to some embodiments. **FIG.15** shows a section view of the EVA inner layer 60 covered by an adhesive upper layer 70 and protective tape 132 according to some embodiments. Suitable EVA sheets are available from the Ho Ya Electric Bond Factory, Xin Xing Ind. Area. Xin Feng W. Rd., Shi Jie Town Dong Guan City, Guan Dong, Province, China. In some embodiments, the EVA sheet 60 includes an adhesive 70 that is covered with a protective sheet 132 as shown in **FIG. 15****.** The sheet 132 is removed prior to bringing the EVA sheet 60 into contact with the bottom side 62 of the polyurethane/felt sheet 58 (see **FIG. 13**)**.** Alternatively, adhesive 70 can be sprayed or otherwise applied to one or both of the bottom side of the polyurethane/felt sheet 58 and/or the EVA sheet 60. **FIG. 16** shows a section view of the polyurethane/felt sheet 58 and the EVA inner layer 60 after they have been joined. The finished sheet 50 can then be wound onto to a spool 134 to wait for further processing. Alternatively, it can be directed to another location for continuous further processing.

**FIG. 14** shows the polyurethane/felt sheet 58 prior to being bonded to the EVA inner layer 60. **FIG. 15** shows the EVA inner layer 60 prior to being bonded to the polyurethane/felt sheet 58. **FIG. 16** shows the bonded polyurethane/felt/EVA sheet 50. In some embodiments, the polyurethane/felt sheet 58 is glued to the EVA inner layer 60.

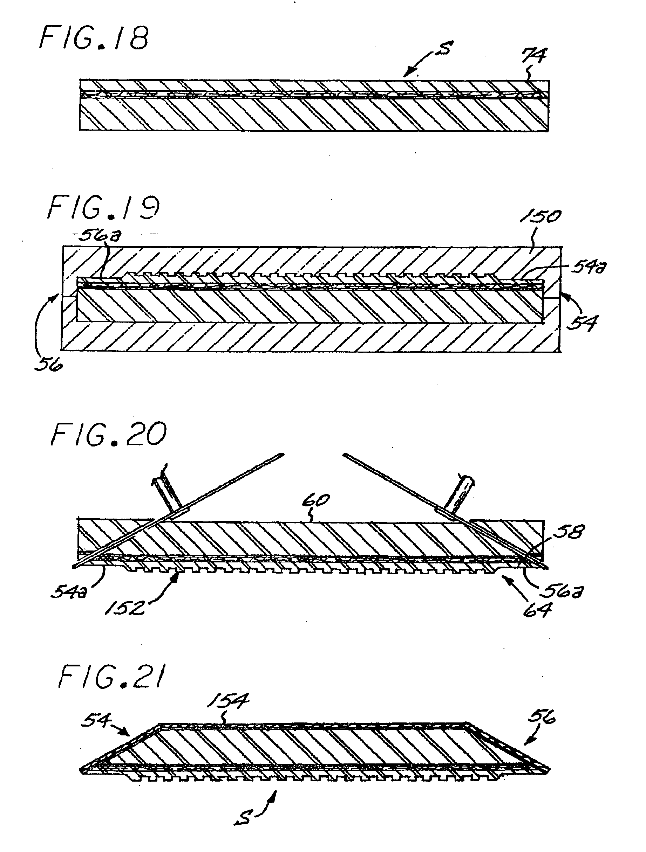

Once formed, the polyurethane/felt/EVA sheet 50 can be cut into any suitable shape, such as the strip S shown in **FIG. 2****.** The strip S includes first and second side edges 54, 56. **FIG. 18** is a section view of a strip S cut from the sheet 50 according to some embodiments and prior to being further processed as described in greater detail below. **FIG. 19** illustrates a mold 150 that can be used to form a friction enhancing pattern 152 on the top surface 64 of the polyurethane/felt/EVA strip 50. Heat compressed side edges 54a, 54b are also shown being created in the polyurethane 74 along the first and second sides 54, 56. Though shown as a separate step, the friction enhancing pattern 152 and/or compressed side edges can be created after the strip is formed from the sheet, at the same time as the strip is created, or before. **FIGS. 20-21** show skiving tools that can be used to form skived edges on the strip S. In some embodiments, the first and second side edges 54, 56 can be skived through one or more layers of the strip S. In the illustrated embodiment, the skiving extends through at least a portion of all of the layers of the strip S. In some embodiments, the side edges 54, 56 are skived in an anti-parallel fashion such that, when spirally wrapped around the handle portion, one of the skived edges of the strip S overlaps and contacts the polyurethane portion 64 of the other side edge. (See **FIG. 23**)**.** In some embodiments, the side edges 54, 56 are skived in a parallel fashion such that, when wrapped around the mounting surface, the edges 54, 56 overlap with like layers in contact with and glued to like layers (not shown).

**FIG. 21** shows a section view of a strip according to some embodiments. The strip includes a layer of adhesive backed tape 154 substantially covering the inner surface 66 of the strip S. In some embodiments, the tape 154 only covers a portion of the bottom surface 66 of the EVA base layer 60.

**FIG. 22** shows an exemplary handle BH for a bicycle. The curved radius of the handle BH is effectively covered by the flexible strip S according to some embodiments.

**FIGS. 23-24** show the application of a gripping member or strip S onto a bicycle handle BH according to some embodiments. The protective tape 154 can be removed from the inner surface 66 of the strip S and the strip S can be spirally wound from an end portion 156 of the handle BH toward a mid portion 158 of the handle BH. In some embodiments, the strip S is skived with anti-parallel sides 54, 56 such that a portion of the skived EVA base layer 60 of one side edge overlaps the polyurethane 64 on the other side edge during the winding process. When the winding is complete, the strip S can be secured near the mid portion with tape or other rubber or adhesive means. The excess 158 strip, shown at the first end portion 156 shown in **FIG. 23****,** can be trimmed off with a knife or other sharp tool. Alternatively, the excess 158 can be folded into the hollow end portion 164 of the bike handle BH. As shown in **FIG. 24****,** the end 156 of the grip G can be finished off with a cap 166. In the illustrated embodiment, the cap 166 is configured to extend into the hollow end portion 164 of the handle BH to trap at least a portion of the strip S therein.

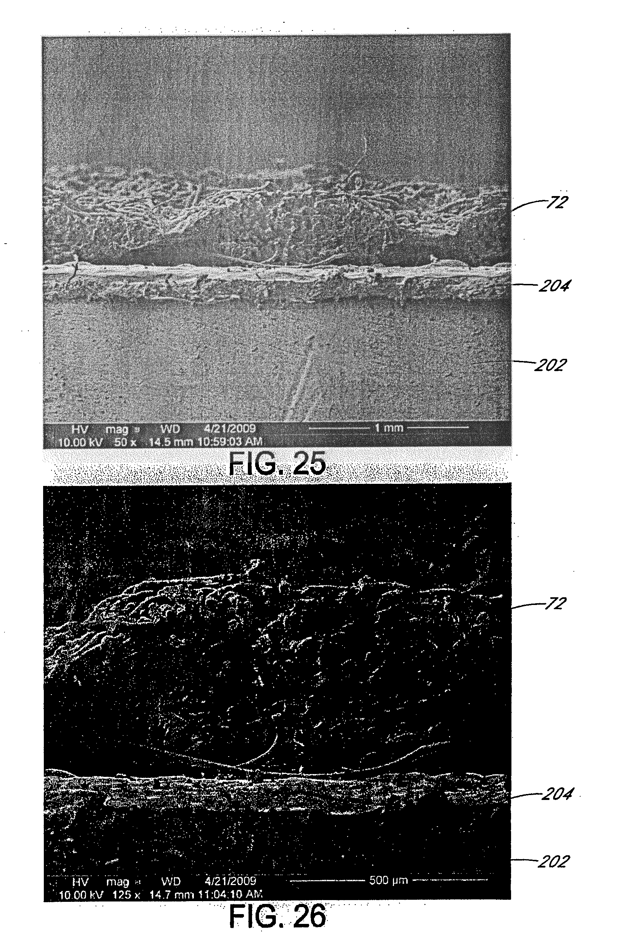

**FIGS. 25-35** are SEM images of an embodiment of a grip and various components of the grip at different stages of the manufacturing process.

**FIG. 25** is a SEM image of a cross-section of the thin fabric sheet 72 schematically illustrated in, for example, **FIGS. 6-6B****.** To facilitate the imaging, the sheet 72 was attached to an SEM stub 202 (shown in the foreground/bottom of **FIG. 25**) with double sided carbon tape 204 (shown between the stub and component in **FIG. 25**)**.** The stub 202 and the tape 204 are not illustrated in the schematics and are not part of the imaged sheet 72.

**FIG. 26** is an enlarged SEM image of a portion of the cross-section shown in **FIG. 25****.** The image also shows the SEM stub 202 and carbon tape 204 as described above with respect to **FIG. 25****.**

**FIG. 27** is an enlarged SEM image of another portion of the cross-section shown in **FIG. 25****.** The image also shows the SEM stub 202 and carbon tape 204 as described above with respect to **FIG. 25****.** The image shows sheet 72 including a polymer 75 extending across the dimples 84 as described above.

**FIG. 28** is a SEM image of a surface of the sheet 72 schematically illustrated in, for example, **FIGS. 6-6B****.**

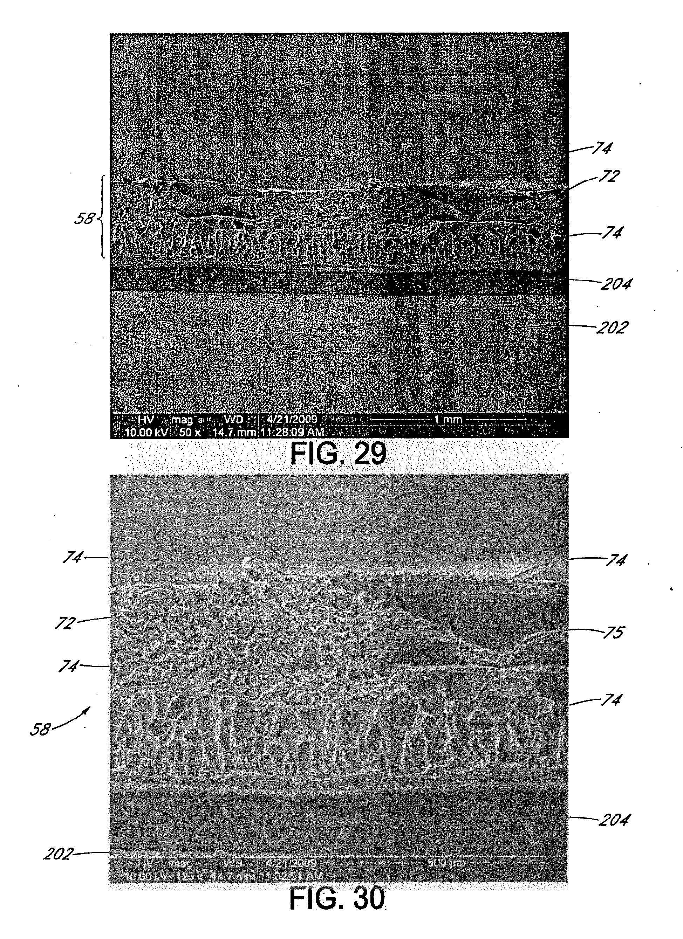

**FIG. 29** is a SEM image of a cross-section of the outer layer 58 schematically illustrated in, for example, **FIGS. 9 and 11****.** The image also shows the SEM stub 202 and carbon tape 204 as described above with respect to **FIG. 25****.** In addition, the outer layer 58 appears upside down as compared to the schematics (with the polyurethane 74 of the outer layer 58 in the illustrated embodiment attached to the stub 202 by the carbon tape 204 on the bottom of the image).

**FIG. 30** is an enlarged SEM image of a portion of the cross-section shown in FIG. 29. The image also shows the SEM stub 202 and carbon tape 204 as described above with respect to **FIG. 25****.** In addition, the outer layer 58 appears upside down as compared to the schematics (with the polyurethane 74 of the outer layer 58 in the illustrated embodiment attached to the stub 202 by the carbon tape 204 on the bottom of the image). Polyurethane 74 is also shown penetrating into sheet 72 as described above.

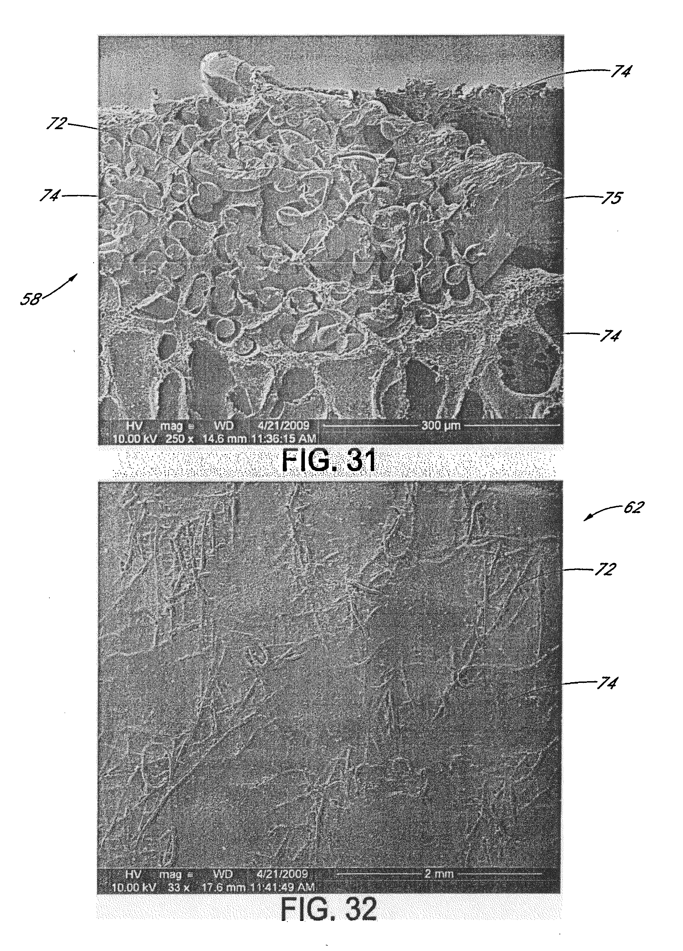

**FIG. 31** is an enlarged SEM image of a portion of the enlarged cross-section shown in **FIG. 30****.** The outer layer 58 appears upside down as compared to the schematics (with the polyurethane 74 of the outer layer 58 in the illustrated embodiment on the bottom). Polyurethane 74 is also shown penetrating into sheet 72 as described above.

**FIG. 32** is a SEM image of the bottom surface 62 of the outer layer 58 schematically illustrated in, for example, **FIGS. 9,11****, and** **12A-B.**

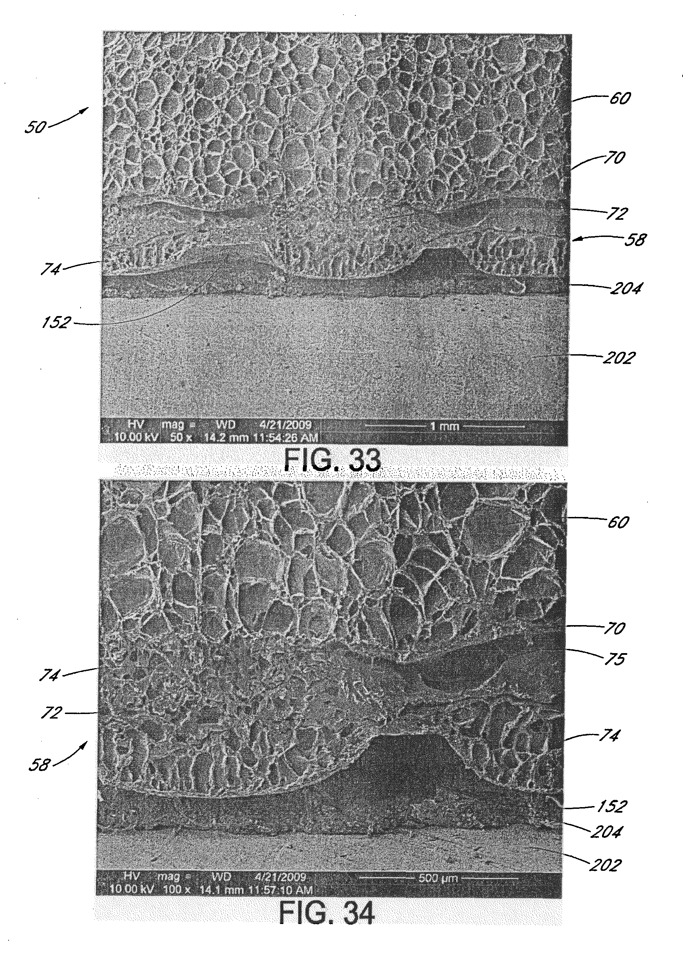

**FIG. 33** is a SEM image of a portion of a cross-section of the gripping member 50 schematically illustrated in, for example, **FIGS. 19, 20, and 21****.** The image also shows the SEM stub 202 and carbon tape 204 as described above with respect to **FIG. 25****.** In addition, the gripping member 50 appears upside down as compared to the schematic illustrated in **FIG. 19** (with the polyurethane 74 of the outer layer 58 in the illustrated embodiment attached to the stub 202 by the carbon tape 204 on the bottom of the image).

**FIG. 34** is an enlarged SEM image of a portion of the cross-section shown in FIG. 33. The image also shows the SEM stub 202 and carbon tape 204 as described above with respect to **FIG. 25****.** In addition, the gripping member 50 appears upside down as compared to the schematic illustrated in **FIG. 19** (with the polyurethane 74 of the outer layer 58 in the illustrated embodiment attached to the stub 202 by the carbon tape 204 on the bottom of the image). Polyurethane 74 is also shown penetrating into sheet 72 as described above.

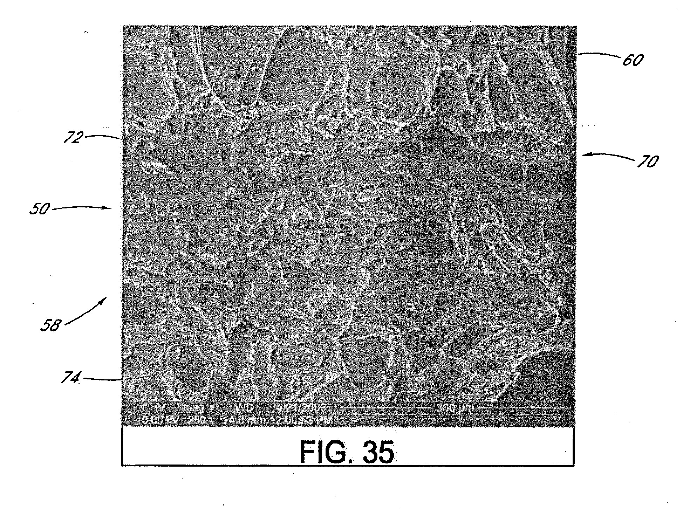

**FIG. 35** is an enlarged SEM image of a portion of the cross-section shown in **FIG. 34****.** The gripping member 50 appears upside down as compared to the schematic illustrated in **FIG. 19** (with the polyurethane 74 of the outer layer 58 in the illustrated embodiment on the bottom). Polyurethane 74 is also shown penetrating into sheet 72 as described above.

As described above, it may be advantageous to apply the gripping member 50 to a sleeve prior to application to the handle portion of the article. In some embodiments, that sleeve can be made from EVA. According to some embodiments, an initial block of EVA is ground down into its final shape and the gripping member is applied thereto. In some embodiments, the EVA sleeve is injection molded rather than ground down from a block of EVA foam. Ethylene vinyl acetate copolymers possess many excellent characteristics such as low weight, low density, flexibility, transparency, non-toxicity and good resistance to environmental stress cracking, etc. Some embodiments of the present invention overcome the difficulties of working with injection molded EVA. For example, EVA coagulation is a relatively slow process. After injection molding a rough EVA sleeve, a core bar can be inserted inside the sleeve and the sleeve can be transferred to an appropriate mold to control the shape of the finished product. Controlling temperature and time facilitates effective control of the EVA coagulation. In some embodiments, the density of the EVA injected to form the sleeve is less than approximately 1 g/cm³. In some embodiments, the density is between approximately 0.9 and 1 g/cm³. In a preferred embodiment, the density is between approximately 0.930 and 0.943 g/cm³. Controlling the degree of coagulation of the EVA allows embodiments of the invention to include an EVA sleeve whose volume is, for example, approximately doubled or tripled from the original volume. Therefore, in some embodiments, the density of the finished sleeve can be approximately one half or one third of the original density.

The invention has been described in terms of certain preferred embodiments. One or more aspects of each of the embodiments can be combined with one or more aspects of other embodiments and such combinations are specifically contemplated herein.

## Claims

1. A method of making a gripping member for use with the handle portion of an article, the method comprising the steps of:
(1) immersing a fabric sheet comprising an inner surface and an outer surface into liquid polyurethane such that polyurethane forms a coating over both the inner surface and the outer surface;
(2) removing a portion of the polyurethane from the inner surface of the fabric sheet;
(3) coagulating the polyurethane on and in the first fabric sheet to form an outer sheet;
(4) joining the outer sheet to a sheet comprising ethylene vinyl acetate; and
(5) forming a gripping member from the outer sheet joined to the ethylene vinyl acetate sheet, the gripping member defining an inner surface and an outer surface.

2. The method of Claim 1, wherein the coagulation step further comprises dipping the fabric sheet with the portion of the polyurethane removed from its inner surface into at least one water bath to facilitate the coagulation.

3. The method of Claim 1, further comprising the step of squeezing fluid from the coagulated polyurethane.

4. The method of Claim 1, wherein the fabric sheet is a composite sheet having the attributes of both an elastic sheet and a fabric sheet.

5. The method of Claim 4, wherein the fabric sheet has been pre-treated with an olefin polymer prior to the immersion step into the bath of polyurethane.

6. The method of Claim 1, further comprising the step of smoothing the polyurethane coating on the outer surface of the fabric sheet;

7. The method of Claim 1, wherein the polyurethane penetrates through the fabric sheet between the inner and outer surfaces.

8. The method of Claim 1, wherein an inner surface of the outer sheet comprises polyurethane and the fabric sheet and an outer surface of the outer sheet comprises polyurethane.

9. The method of Claim 6, wherein the steps of removing the polyurethane from the inner surface of the fabric sheet and smoothing the polyurethane coating the outer surface of the fabric sheet comprise directing the immersed fabric sheet through a first pair of rollers, one roller including a smooth radial surface for smoothing the polyurethane on the outer surface of the fabric sheet and the other roller including a resilient radial surface for removing the majority of the polyurethane from the inner surface of the fabric sheet.

10. The method of Claim 1, wherein the step of forming the gripping member comprises forming a strip configured to be spirally wound around the handle of an article.

11. The method of Claim 10, further comprising the step of skiving the side edges of the strip so that the outer surface of the outer sheet defines a first width and an inner surface of the ethylene vinyl acetate sheet defines a second width, the first width being larger than the second width.

12. The method of Claim 1, wherein the step of immersing the fabric sheet facilitates the penetration of polyurethane between the fibers of the fabric sheet.

13. The method of Claim 1, wherein the step of providing the fabric sheet further comprises providing a fabric sheet compressed with a dimpled pattern providing a pattern of crests and troughs.

14. The method of Claim 13, wherein the step of immersing the fabric sheet causes the majority of the troughs to fill with polyurethane.

15. The method of Claim 14, wherein the step of removing the polyurethane from the inner surface exposes a portion of the crests on the inner surface.

16. The method of Claim 1, wherein the step of providing the fabric sheet further comprises providing a fabric sheet including a fabric mesh attached to the outer surface of the fabric sheet.

17. The method of Claim 16, wherein the step of immersing the fabric sheet further comprises simultaneously immersing the fabric mesh, wherein the polyurethane covers the fabric mesh.

18. The method of Claim 17, wherein the coagulation of the polyurethane bonds the fabric mesh to the fabric sheet.

19. A grip made according to the method of claim 1 configured for use with a handle portion of an article, the grip comprising:
a gripping member comprising
an inner layer comprising ethylene vinyl acetate joined to an outer layer, wherein
the outer layer comprises polyurethane and fabric, wherein polyurethane substantially covers both sides of the fabric.

20. A grip as claimed in claim 19, wherein
the fabric of the outer layer is an elastic fabric and the outer layer has an inner surface and an outer surface, wherein
an inner and outer surface of the elastic fabric comprise a pattern of crests and troughs, the crests on the inner and outer surfaces defining an inner fabric surface plane and an outer fabric surface plane, respectively, wherein
the outer surface of the outer layer and the outer fabric surface plane define a first thickness and the inner surface of the outer layer and the inner fabric surface plane define a second thickness, the first thickness being greater than the second thickness.

21. A grip as in claim 19 or 20, wherein the gripping member is configured as a strip adapted to be spirally wound around at least a portion of the handle of an article.

22. A grip as in Claim 19 or 20, wherein the gripping member further comprises a fabric mesh positioned outward from the elastic fabric and substantially covered by the polyurethane.

23. A grip as in Claim 19 or 20, wherein the first thickness is substantially greater than the second thickness.

24. A grip as in Claim 19 or 20, wherein the second thickness is approximately zero.

25. A bicycle including the grip of Claim 19 or 20.

26. A bicycle grip kit comprising:
instructions for use and a grip as claimed in claim 20, wherein
the gripping member is configured as a strip, wherein
a substantial portion of the crests on the inner surface are substantially free of polyurethane and the polyurethane fills the majority of the troughs on both the inner and outer surfaces of the elastic fabric and covers the majority of the crests on the outer surface of the elastic fabric, wherein
the polyurethane in the troughs of the inner surface of the elastic fabric and the crests of the inner surface of the elastic fabric are joined to the inner layer.

27. A kit as claimed in Claim 26, further comprising a second gripping member configured as a strip, the gripping member comprising:
an inner layer comprising ethylene vinyl acetate and an outer layer comprising polyurethane and an elastic fabric having an inner surface and an outer surface wherein the inner and outer surfaces of the elastic fabric comprise a pattern of crests and troughs, wherein some of the crests on the inner surface are substantially free of polyurethane and the polyurethane fills the majority of the troughs on both the inner and outer surfaces of the elastic fabric and covers the majority of the crests on the outer surface of the elastic fabric, wherein
the polyurethane in the troughs of the inner surface of the elastic fabric and the crests of the inner surface of the elastic fabric are joined to the inner layer.

28. A kit as claimed in Claim 27, further comprising first and second bar plugs configured for use with the handle bar of a bicycle.

## Patentansprüche

1. Verfahren zur Herstellung eines Halteelements zur Verwendung mit dem Handgriffabschnitt eines Produkts, wobei das Verfahren die folgenden Schritte aufweist:
(1) Eintauchen einer Gewebebahn, die eine innere Oberfläche und eine äußere Oberfläche aufweist, in flüssiges Polyurethan, so dass Polyurethan eine Beschichtung über sowohl der inneren Oberfläche als auch der äußeren Oberfläche bildet;
(2) Entfernen eines Abschnitts des Polyurethans von der inneren Oberfläche der Gewebebahn;
(3) Koagulieren des Polyurethans auf und in der ersten Gewebebahn zur Bildung einer äußeren Bahn;
(4) Verbinden der äußeren Bahn mit einer Bahn, die Ethylenvinylacetat aufweist; und
(5) Bilden eines Halteelements aus der äußeren Bahn, die mit der Ethylenvinylacetat-Bahn verbunden ist, wobei das Halteelement eine innere Oberfläche und eine äußere Oberfläche definiert.

2. Verfahren nach Anspruch 1, wobei der Koagulationsschritt ferner ein Tauchen der Gewebebahn, wobei der Abschnitt des Polyurethans von ihrer inneren Oberfläche entfernt wurde, in wenigstens ein Wasserbad aufweist, um die Koagulation zu ermöglichen.

3. Verfahren nach Anspruch 1, das ferner den Schritt des Ausdrückens eines Fluids aus dem koagulierten Polyurethan aufweist.

4. Verfahren nach Anspruch 1, wobei die Gewebebahn eine Verbundbahn ist, die die Eigenschaften sowohl einer elastischen Bahn als auch einer Gewebebahn aufweist.

5. Verfahren nach Anspruch 4, wobei die Gewebebahn vor dem Eintauchschritt in das Bad aus Polyurethan mit einem Olefinpolymer vorbehandelt wurde.

6. Verfahren nach Anspruch 1, das ferner den Schritt des Glättens der Polyurethanbeschichtung auf der äußeren Oberfläche der Gewebebahn aufweist.

7. Verfahren nach Anspruch 1, wobei das Polyurethan die Gewebebahn zwischen der inneren und der äußeren Oberfläche durchdringt.

8. Verfahren nach Anspruch 1, wobei eine innere Oberfläche der äußeren Bahn Polyurethan und die Gewebebahn aufweist und eine äußere Oberfläche der äußeren Bahn Polyurethan aufweist.

9. Verfahren nach Anspruch 6, wobei die Schritte des Entfernens des Polyurethans von der inneren Oberfläche der Gewebebahn und des Glättens der Polyurethanbeschichtung auf der äußeren Oberfläche der Gewebebahn ein Leiten der eingetauchten Gewebebahn durch ein erstes Paar Walzen aufweisen, wobei eine Walze eine glatte radiale Oberfläche zum Glätten des Polyurethans auf der äußeren Oberfläche der Gewebebahn einschließt und die andere Walze eine elastische radiale Oberfläche zum Entfernen des Großteils des Polyurethans von der inneren Oberfläche der Gewebebahn einschließt.

10. Verfahren nach Anspruch 1, wobei der Schritt des Bildens des Halteelements ein Bilden eines Streifens aufweist, der dazu ausgestaltet ist, spiralförmig um den Handgriff eines Produkts gewickelt zu sein.

11. Verfahren nach Anspruch 10, das ferner den Schritt des Ausschärfens der Seitenkanten des Streifens aufweist, so dass die äußere Oberfläche der äußeren Bahn eine erste Breite definiert und eine innere Oberfläche der Ethylenvinylacetat-Bahn eine zweite Breite definiert, wobei die erste Breite größer als die zweite Breite ist.

12. Verfahren nach Anspruch 1, wobei der Schritt des Eintauchens der Gewebebahn das Durchdringen von Polyurethan zwischen den Fasern der Gewebebahn ermöglicht.

13. Verfahren nach Anspruch 1, wobei der Schritt des Bereitstellens der Gewebebahn ferner ein Bereitstellen einer Gewebebahn aufweist, die mit einem Vertiefungsmuster komprimiert wird, das ein Muster aus Kuppen und Mulden bereitstellt.

14. Verfahren nach Anspruch 13, wobei der Schritt des Eintauchens der Gewebebahn verursacht, dass der Großteil der Mulden mit Polyurethan gefüllt wird.

15. Verfahren nach Anspruch 14, wobei der Schritt des Entfernens des Polyurethans von der inneren Oberfläche einen Abschnitt der Kuppen auf der inneren Oberfläche freilegt.

16. Verfahren nach Anspruch 1, wobei der Schritt des Bereitstellens der Gewebebahn ferner ein Bereitstellen einer Gewebebahn aufweist, die ein Gewebegeflecht einschließt, das an der äußeren Oberfläche der Gewebebahn befestigt ist.

17. Verfahren nach Anspruch 16, wobei der Schritt des Eintauchens der Gewebebahn ferner ein gleichzeitiges Eintauchen des Gewebegeflechts aufweist, wobei das Polyurethan das Gewebegeflecht bedeckt.

18. Verfahren nach Anspruch 17, wobei die Koagulation des Polyurethans das Gewebegeflecht an die Gewebebahn bindet.

19. Griff, der gemäß dem Verfahren nach Anspruch 1 hergestellt ist und zur Verwendung mit einem Handgriffabschnitt eines Produkts ausgestaltet ist, wobei der Griff Folgendes aufweist:
ein Halteelement, das
eine innere Schicht aufweist, die Ethylenvinylacetat aufweist und mit einer äußeren Schicht verbunden ist, wobei
die äußere Schicht Polyurethan und Gewebe aufweist, wobei Polyurethan im Wesentlichen beide Seiten des Gewebes bedeckt.

20. Griff nach Anspruch 19, wobei
das Gewebe der äußeren Schicht ein elastisches Gewebe ist und die äußere Schicht eine innere Oberfläche und eine äußere Oberfläche aufweist, wobei
eine innere und eine äußere Oberfläche des elastischen Gewebes ein Muster aus Kuppen und Mulden aufweist, wobei die Kuppen auf der inneren und äußeren Oberfläche jeweils eine innere Gewebeoberflächenebene und eine äußere Gewebeoberflächenebene definieren, wobei
die äußere Oberfläche der äußeren Schicht und die äußere Gewebeoberflächenebene eine erste Stärke definieren und die innere Oberfläche der äußeren Schicht und die innere Gewebeoberflächenebene eine zweite Stärke definieren, wobei die erste Stärke größer als die zweite Stärke ist.

21. Griff nach Anspruch 19 oder 20, wobei das Halteelement als Streifen ausgebildet ist, der so angepasst ist, dass er spiralförmig um wenigstens einen Abschnitt des Handgriffs eines Produkts gewickelt ist.

22. Griff nach Anspruch 19 oder 20, wobei das Halteelement ferner ein Gewebegeflecht aufweist, das außerhalb des elastischen Gewebes positioniert ist und im Wesentlichen von dem Polyurethan bedeckt ist.

23. Griff nach Anspruch 19 oder 20, wobei die erste Stärke im Wesentlichen größer ist als die zweite Stärke.

24. Griff nach Anspruch 19 oder 20, wobei die zweite Stärke ungefähr null beträgt.

25. Fahrrad, das den Griff nach Anspruch 19 oder 20 einschließt.

26. Fahrradgriffset, das Folgendes aufweist:
eine Benutzeranleitung und einen Griff nach Anspruch 20, wobei das Halteelement als Streifen ausgebildet ist, wobei
ein wesentlicher Teil der Kuppen auf der inneren Oberfläche im Wesentlichen frei von Polyurethan sind und das Polyurethan den Großteil der Mulden auf sowohl der inneren als auch der äußeren Oberfläche des elastischen Gewebes füllt und den Großteil der Kuppen auf der äußeren Oberfläche des elastischen Gewebes bedeckt, wobei
das Polyurethan in den Mulden der inneren Oberfläche des elastischen Gewebes und die Kuppen der inneren Oberfläche des elastischen Gewebes mit der inneren Schicht verbunden sind.

27. Set nach Anspruch 26, das ferner ein zweites Halteelement aufweist, das als Streifen ausgebildet ist, wobei das Halteelement Folgendes aufweist:
eine innere Schicht, die Ethylenvinylacetat aufweist, und eine äußere Schicht, die Polyurethan aufweist, und ein elastisches Gewebe, das eine innere Oberfläche und eine äußere Oberfläche aufweist, wobei die innere und die äußere Oberfläche des elastischen Gewebes ein Muster aus Kuppen und Mulden aufweist, wobei einige der Kuppen auf der inneren Oberfläche im Wesentlichen frei von Polyurethan sind und das Polyurethan den Großteil der Mulden auf der inneren und der äußeren Oberfläche des elastischen Gewebes füllt und den Großteil der Kuppen auf der äußeren Oberfläche des elastischen Gewebes bedeckt, wobei
das Polyurethan in den Mulden der inneren Oberfläche des elastischen Gewebes und die Kuppen der inneren Oberfläche des elastischen Gewebes mit der inneren Schicht verbunden sind.

28. Set nach Anspruch 27, das ferner einen ersten und einen zweiten Stangenstöpsel aufweist, die zur Verwendung mit der Lenkstange eines Fahrrads ausgestaltet sind.

## Revendications

1. Procédé de fabrication d'un élément de prise pour utilisation avec la partie formant poignée d'un article, le procédé comprenant les étapes suivantes :
(1) l'immersion d'une feuille de tissu comprenant une surface interne et une surface externe dans du polyuréthane liquide de telle sorte que le polyuréthane forme un revêtement à la fois sur la surface interne et la surface externe ;
(2) le retrait d'une partie du polyuréthane de la surface interne de la feuille de tissu ;
(3) la coagulation du polyuréthane sur et dans la première feuille de tissu pour former une feuille externe ;
(4) la jonction de la feuille externe à une feuille comprenant de l'acétate de vinyle-éthylène ; et
(5) la formation d'un élément de prise à partir de la feuille externe jointe à la feuille d'acétate de vinyle-éthylène, l'élément de prise définissant une surface interne et une surface externe.

2. Procédé selon la revendication 1, dans lequel l'étape de coagulation comprend en outre le trempage de la feuille de tissu avec la partie du polyuréthane retiré de sa surface interne dans au moins un bain d'eau pour faciliter la coagulation.

3. Procédé selon la revendication 1, comprenant en outre l'étape de pressage du fluide du polyuréthane coagulé.

4. Procédé selon la revendication 1, dans lequel la feuille de tissu est une feuille composite possédant à la fois les attributs d'une feuille élastique et d'une feuille de tissu.

5. Procédé selon la revendication 4, dans lequel la feuille de tissu a été prétraitée avec un polymère oléfinique préalablement à l'étape d'immersion dans le bain de polyuréthane.

6. Procédé selon la revendication 1, comprenant en outre l'étape de lissage du revêtement en polyuréthane sur la surface externe de la feuille de tissu ;

7. Procédé selon la revendication 1, dans lequel le polyuréthane pénètre à travers la feuille de tissu entre les surfaces interne et externe.

8. Procédé selon la revendication 1, dans lequel une surface interne de la feuille externe comprend du polyuréthane et la feuille de tissu et une surface externe de la feuille externe comprend du polyuréthane.

9. Procédé selon la revendication 6, dans lequel les étapes de retrait du polyuréthane de la surface interne de la feuille de tissu et de lissage du polyuréthane revêtant la surface externe de la feuille de tissu comprennent l'orientation de la feuille de tissu immergée à travers une première paire de rouleaux, un rouleau incluant une surface radiale lisse pour lisser le polyuréthane sur la surface externe de la feuille de tissu et l'autre rouleau incluant une surface radiale résiliente pour retirer la majeure partie du polyuréthane de la surface interne de la feuille de tissu.

10. Procédé selon la revendication 1, dans lequel l'étape de formation de l'élément de prise comprend la formation d'une bande configurée pour être enroulée en spirale autour de la poignée d'un article.

11. Procédé selon la revendication 10, comprenant en outre l'étape de coupage en biseau des bords latéraux de la bande de telle sorte que la surface externe de la feuille externe définisse une première largeur et qu'une surface interne de la feuille d'acétate de vinyle-éthylène définisse une seconde largeur, la première largeur étant supérieure à la seconde largeur.

12. Procédé selon la revendication 1, dans lequel l'étape d'immersion de la feuille de tissu facilite la pénétration de polyuréthane entre les fibres de la feuille de tissu.

13. Procédé selon la revendication 1, dans lequel l'étape de fourniture de la feuille de tissu comprend en outre la fourniture d'une feuille de tissu comprimée avec un motif alvéolé formant un motif de crêtes et de creux.

14. Procédé selon la revendication 13, dans lequel l'étape d'immersion de la feuille de tissu amène la majeure partie des creux à se remplir de polyuréthane.

15. Procédé selon la revendication 14, dans lequel l'étape de retrait du polyuréthane de la surface interne expose une partie des crêtes sur la surface interne.

16. Procédé selon la revendication 1, dans lequel l'étape de fourniture de la feuille de tissu comprend en outre la fourniture d'une feuille de tissu incluant une maille de tissu fixée à la surface externe de la feuille de tissu.

17. Procédé selon la revendication 16, dans lequel l'étape d'immersion de la feuille de tissu comprend en outre l'immersion simultanée de la maille de tissu, dans lequel le polyuréthane recouvre la maille de tissu.

18. Procédé selon la revendication 17, dans lequel la coagulation du polyuréthane lie la maille de tissu à la feuille de tissu.

19. Prise réalisée selon le procédé de la revendication 1 configurée pour être utilisée avec une partie formant poignée d'un article, la prise comprenant .
un élément de prise comprenant
une couche interne comprenant de l'acétate de vinyle-éthylène jointe à une couche externe, dans laquelle
la couche externe comprend du polyuréthane et du tissu, dans laquelle le polyuréthane recouvre les deux côtés du tissu.

20. Prise selon la revendication 19, dans laquelle
le tissu de la couche externe est un tissu élastique et la couche externe possède une surface interne et une surface externe, dans laquelle
une surface interne et externe du tissu élastique comprend un motif de crêtes et de creux, les crêtes sur les surfaces interne et externe définissant respectivement un plan de surface de tissu interne et un plan de surface de tissu externe, dans laquelle
la surface externe de la couche externe et le plan de surface du tissu externe définissent une première épaisseur et la surface interne de la couche externe et le plan de surface du tissu interne définissent une seconde épaisseur, la première épaisseur étant supérieure à la seconde épaisseur.

21. Prise selon la revendication 19 ou 20, dans laquelle l'élément de prise est configuré sous forme de bande conçue pour être enroulée en spirale autour d'au moins une partie de la poignée d'un article.

22. Prise selon la revendication 19 ou 20, dans laquelle l'élément de prise comprend en outre une maille de tissu positionnée à l'extérieur du tissu élastique et sensiblement recouverte par le polyuréthane.

23. Prise selon la revendication 19 ou 20, dans laquelle la première épaisseur est sensiblement supérieure à la seconde épaisseur.

24. Prise selon la revendication 19 ou 20, dans laquelle la seconde épaisseur est quasiment nulle.

25. Bicyclette incluant la prise selon la revendication 19 ou 20.

26. Kit de prise de bicyclette comprenant :
un mode d'emploi et une prise selon la revendication 20, dans lequel
l'élément de prise est configuré sous forme de bande, dans lequel
une partie sensible des crêtes sur la surface interne sont sensiblement exemptes de polyuréthane et le polyuréthane remplit la majeure partie des creux à la fois sur les surfaces interne et externe du tissu élastique et recouvre la majeure partie des crêtes sur la surface externe du tissu élastique, dans lequel
le polyuréthane dans les creux de la surface interne du tissu élastique et les crêtes de la surface interne du tissu élastique sont joints à la couche interne.

27. Kit selon la revendication 26, comprenant en outre un second élément de prise configuré sous forme de bande, l'élément de prise comprenant :
une couche interne comprenant de l'acétate de vinyle-éthylène et une couche externe comprenant du polyuréthane et un tissu élastique comportant une surface interne et une surface externe, dans lequel les surfaces interne et externe du tissu élastique comprennent un motif de crêtes et de creux, dans lequel certaines des crêtes sur la surface interne sont sensiblement exemptes de polyuréthane et le polyuréthane remplit la majeure partie des creux à la fois sur les surfaces interne et externe du tissu élastique et recouvre la majeure partie des crêtes sur la surface externe du tissu élastique, dans lequel
le polyuréthane dans les creux de la surface interne du tissu élastique et les crêtes de la surface interne du tissu élastique sont joints à la couche interne.

28. Kit selon la revendication 27, comprenant en outre des premier et second embouts de guidon configurés pour utilisation avec le guidon d'une bicyclette.
